# EUROPÄISCHE PATENTSCHRIFT

(11) **EP 0 554 539 B1**
(45) Veröffentlichungstag und Bekanntmachung des Hinweises auf die Patenterteilung: **05.03.1997**
(21) Anmeldenummer: 92120540.7
(22) Anmeldetag: 02.12.1992
(51) Int. Cl.: B29C 53/58, B29C 70/00, B29C 70/32

(54) **Verfahren zur integralen Herstellung von Wagenkasten**
Process for manufacturing a monogue coach body
Procédé de fabrication de caisses monogues de véhicules

(30) Priorität: 28.01.1992 CH 227/92
(43) Veröffentlichungstag der Anmeldung: 11.08.1993
(73) Patentinhaber: INVENTIO AG, CH-6052 Hergiswil NW (CH)
(72) Erfinder: Stettler, Andreas, CH-9426 Lutzenberg (CH); Anderegg, Kurt, CH-9424 Rheineck (CH)

(56) Entgegenhaltungen:
- WO-A-83/01924
- DE-A- 1 778 493
- DE-C- 479 726
- FR-A- 1 344 536
- GB-A- 1 490 575
- US-A- 2 095 626
- US-A- 3 126 718
- US-A- 3 372 075
- US-A- 4 425 980

## Beschreibung

Die Erfindung bezieht sich auf ein Verfahren zur integralen Herstellung von Wagenkasten mit einer selbsttragenden Leichtbaustruktur, bei dem tragende Teile, Verkleidungs-, Ausrüstungs- und Isolationsteile in mehrere Wickelschichten eingebunden werden.

Aus der Patentschrift GB 1 490 575 ist ein im Wickelverfahren hergestellter Wagenkasten bekannt, der eine innere Wickelschicht, ein Versteifungsgerippe, im Versteifungsgerippe angeordnete Isolation und eine äussere Wickelschicht aufweist. Ausserdem sind zwischen innerer und äusserer Wickelschicht Aussparungen zur Aufnahme von Lüftung, Heizung, Elektroinstallation, Beleuchtung und sanitären Einrichtungen vorgesehen. Innere Wickelschicht, Versteifungsgerippe, Isolation und äussere Wickelschicht bilden einen selbsttragenden Wagenkasten.

Ein Nachteil des bekannten Verfahrens liegt darin, dass der im Wickelverfahren hergestellte Wagenkasten Bereiche mit ungenügender Isolation aufweist. Ausserdem wird der Aufbau des Wagenkastens den auftretenden Längskräften nicht gerecht.

Hier will die Erfindung Abhilfe schaffen. Die Erfindung, wie sie in den Ansprüchen gekennzeichnet ist, löst die Aufgabe, die Nachteile des bekannten Verfahrens zu vermeiden und ein Verfahren zu schaffen, mit dem vollständige, selbstragende Wagenkasten unter Anwendung bekannter Wickeltechniken herstellbar sind.

Die durch die Erfindung erreichten Vorteile sind im wesentlichen darin zu sehen, dass eine rationelle Herstellung von Wagenkasten möglich ist, in deren Leichtbaustruktur die Ausgestaltung der Innendecke, die Ausgestaltung des Fussbodens, Lüftungs- und Elektrokanäle, thermische und akustische Isolation, Apparatebehälter, festigkeitsbedingte Träger und Gerippe sowie Zug/Druckstäbe zur Übertragung von Längskräften einbezogen sind. Weitere Vorteile sind darin zu sehen, dass eine kostengünstige Variation der Wand- beziehungsweise Sandwichdicken und der Innen- und Aussenhautdicken zur Optimierung des Verhältnisses von Eigengewicht und Tragvermögen machbar ist, dass Kältebrücken in der durch metallische Profile versteiften Leichtbaustruktur und Schwachstellen hinsichtlich Schallisolation durch eine geschlossene Isolationsschicht vermieden werden.

Im folgenden wird die Erfindung anhand von lediglich einen Ausführungsweg darstellenden Zeichnungen näher erläutert. Es zeigen:
- Fig. 1: eine Wickelvorrichtung für Grossstrukturen, auf der das erfindungsgemässe Verfahren zur Herstellung von Wagenkasten durchgeführt wird,
- Fig. 2: das Anordnen von Kanälen und formgebenden Isolationskörpern im Deckenbereich auf einer in einem ersten Verfahrensschritt hergestellten inneren Deckschicht,
- Fig. 3: das Anordnen von einem Versteifungsgerippe und von Eckprofilen auf der inneren Deckschicht,
- Fig. 4: das Anordnen von Isolationsplatten in die Öffnungen des Versteifungsgerippes und das Anordnen von Blinddeckeln in den Fenster- und Türbereichen,
- Fig. 5: das Überwickeln mit der äusseren Deckschicht des in den Verfahrensschritten der Fig. 1 bis 4 hergestellten Verbundes,
- Fig. 6: das Heraustrennen der Blinddeckel und das Anbringen von Bohrungen für Luftzu- und Abfuhr sowie Öffnungen für Beleuchtungskörper am entformten Wagenkasten,
- Fig. 7: eine Ausführungsvariante des in den Verfahrensschritten der Fig. 1 bis 6 hergestellten Wagenkastens und
- Fig. 8: Einzelheiten des Wagenkastens gemäss Fig. 7.

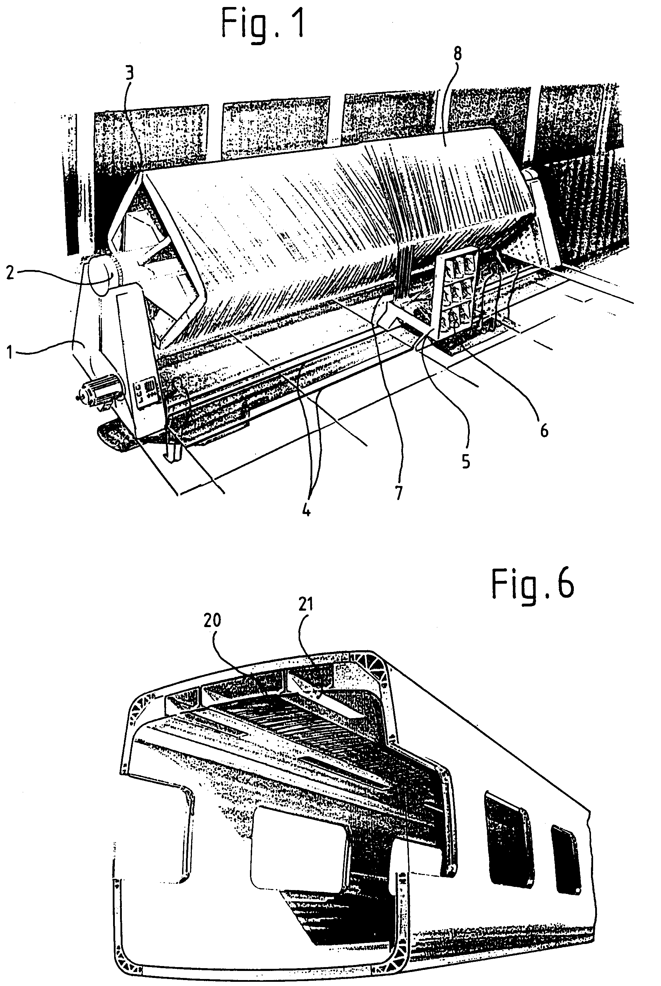

In der Fig. 1 ist eine zur Durchführung des erfindungsgemässen Verfahrens vorgesehene Wickelvorrichtung dargestellt, die aus einem ortsfesten Wickelbock 1, einem vom Wickelbock 1 angetriebenen Dorn 2 und einem vom Dorn 2 getragenen Wickelkern 3 in Wagenkastengrösse besteht. Auf einem auf Schienen 4 verfahrbaren Materialträger 5 sind Faserspulen 6 und/oder Geweberollen 6 angeordnet, deren Fasern und/oder Bänder aus Glasfasern, Carbonfasern oder Naturfasern bestehen und zu einem mit Harz getränkten Faserstrang 7 zusammengeführt werden. Zur Herstellung einer inneren Deckschicht 8 wie auch zur Herstellung der übrigen Wickelschichten wird der Faserstrang 7 auf den um die Dornachse rotierenden Wickelkern 3 in einander kreuzenden Lagen spiralförmig gewickelt.

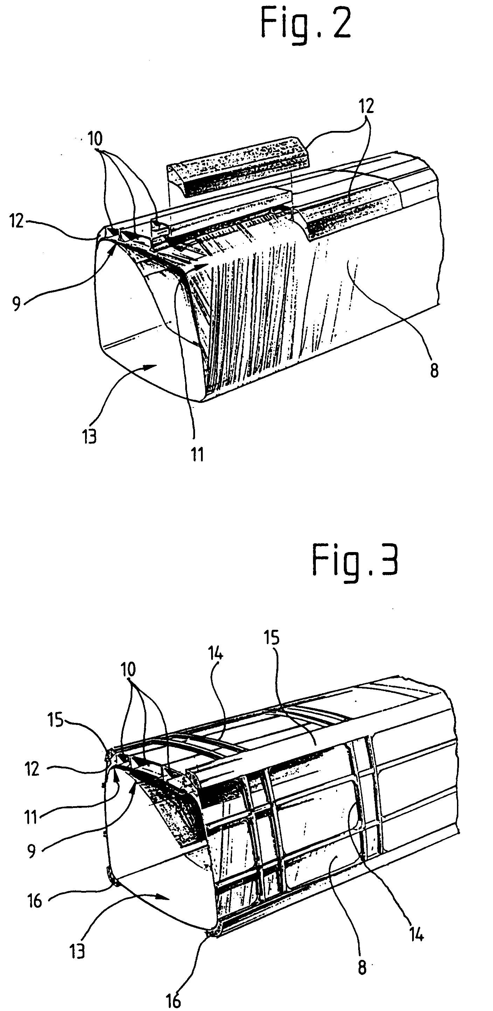

In Fig. 2 ist die vom Wickelkern 3 geformte und getragene innere Deckschicht 8 dargestellt, mit der in einem Deckenbereich 9 U-förmige deckschichtseitig geöffnete Kanäle 10 für Zu- und Abluftführung, Beleuchtung und Apparate sowie in den Eckbereichen 11 formgebende Isolationskörper 12 verklebt werden. In einem mit 13 bezeichneten Bodenbereich ist ein dem Deckenbereich 9 analoger, nicht dargestellter Aufbau vorgesehen.

Zur Aufnahme von Biegebeanspruchungen und Längskräften sind ein Versteifungsgerippe 14 und Eckprofile 15;16 vorgesehen. In einem weiteren in Fig. 3 dargestellten Verfahrensschritt wird mit dem in den vorhergehenden Verfahrensschritten hergestellten Verbund das Versteifungsgerippe 14 wie auch die oberen Eckprofile 15 und unteren Eckprofile 16 verklebt. Das in Fig. 3 dargestellte Versteifungsgerippe 14 besteht aus verschraubten Alu-Strangpressprofilen. Die vier längslaufenden Eckprofile 15;16 stellen obere und untere Langträger dar. Ihre äussere Kontur ist bewicklungsfähig gekrümmt und ihre Querschnittsfläche richtet sich nach den Erfordernissen der Statik.

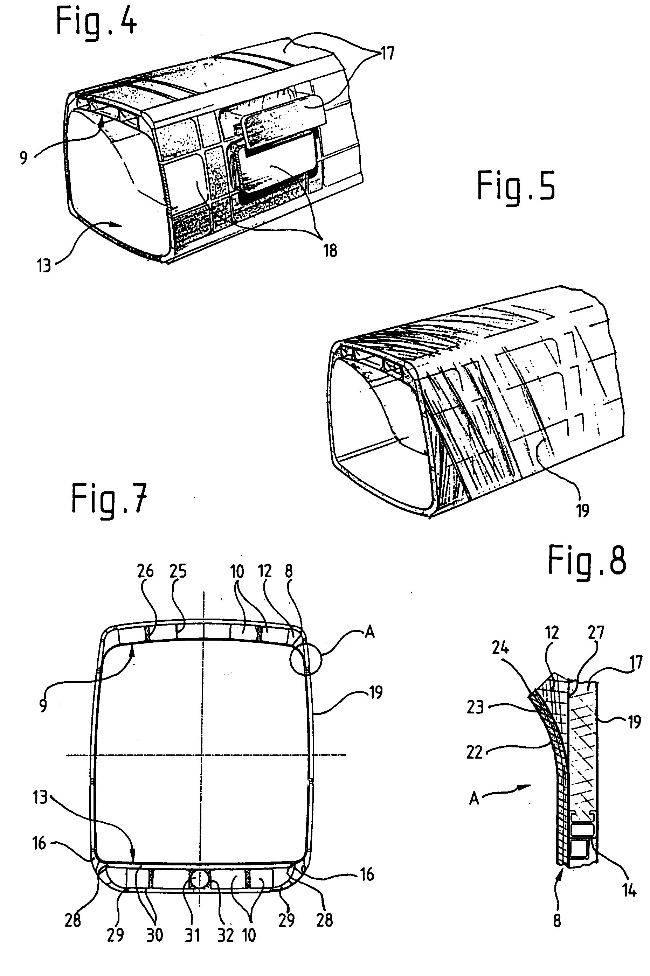

Gemäss Fig. 4 werden in einem weiteren Verfahrensschritt in die rechteckförmigen Öffnungen des Versteifungsgerippes 14 Isolationsplatten 17 geklebt und in die Öffnungen der späteren Fenster und Türen Aussparungen in der Form von Blinddeckeln 18 gelegt. In einer weiteren Variante werden die Öffnungen mit passenden Blechen ausgespart und die entstehenden Hohlräume zwischen den Blechen ausgeschäumt. Damit entsteht wiederum eine absatzlose, überwickelbare Oberfläche, die gemäss Fig. 5 mit einer äusseren Deckschicht 19 überwickelt wird.

In einer weiteren Ausführungsvariante werden in die Öffnungen der späteren Fenster und Türen Aussparungen in der Form von Rahmen gelegt, die nach dem Ausschneiden als Türblatt oder Blindabdeckung in den entsprechenden Öffnungen verwendet werden.

Der in den vorhergehenden Verfahrensschritten hergestellte Wagenkasten wird gemäss Fig. 6 vom formgebenden Wickelkern 3 entformt. Dann werden die Fenster und Türen aussparenden Blinddeckel 18 oder Rahmen herausgetrennt. In der Decke werden Bohrungen 20 für Luftzu- und Abfuhr sowie Öffnungen 21 für Beleuchtungskörper angebracht.

Fig. 8 zeigt einen Ausschnitt A der Fig. 7. Die innere Deckschicht 8 wird ihrerseits als Sandwichelement gestaltet, indem auf eine erste Wickelschicht 22 eine Isolationsmatte 23 über den gesamten Wickelkörper geklebt wird und dann mit einer zweiten Wickelschicht 24 überwickelt wird. Dadurch wird erreicht, dass das wärmeleitende Versteifungsgerippe 14 von der inneren Oberfläche beabstandet und isoliert wird, wodurch sogenannte Kältebrücken vermieden werden. Danach werden im Deckenbereich 9 die U-förmigen mit Stegen 25 verstärkten und mit Schaumformstücken 26 getrennten Kanäle 10 sowie die Isolationskörper 12 mit der zweiten Wickelschicht 24 verklebt. Anschliessend wird die gesamte Formlingoberfläche mit einer dritten Wickelschicht 27 überwickelt.

In einer weiteren Ausführungsvariante wird die äussere Deckschicht 19 als Sandwichelement gestaltet. Aufbau und Verfahren entsprechen dem Aufbau und Verfahren zur Herstellung der inneren Deckschicht 8 als Sandwichelement.

In gewichtssparenden Ausführungen werden die Dicken der Wickelschichten über die Wagenkastenlänge dem Beanspruchungsverlauf angepasst. Im Bodenbereich 13 weisen die zu umwickelnden unteren Eckprofile 16 auf zwei unterschiedlichen Höhen einen ersten Anschluss 28 und einen zweiten Anschluss 29 auf, an denen versteifende Querträger 30 angeschlossen werden. Im Zwischenbereich der Querträger 30 bilden sich Räume, in denen die U-förmigen Kanäle zur Unterbringung von Ausrüstungsgegenständen wie beispielsweise elektrische Apparate eingebunden werden können. Der Zugang erfolgt über nicht dargestellte Bodenöffnungen, die wie die Fenster- und Türenöffnungen in einem späteren Arbeitsgang ausgeschnitten werden. Die an beiden Wagenenden angeordneten Pufferplatten werden durch im Zwischenbereich der Querträger 30 verlaufende Zug- und Druckstäbe 31 verbunden, so dass die im Zugverband zu übertragenden Längskräfte direkt weitergeleitet werden. Durch eine Einschäumung 32 und durch das Überwickeln mit der äusseren Deckschicht 19 werden die Zug- und Druckstäbe 31 kontinuierlich gestützt und gegen Ausknicken geschützt.

Das vorhergehend beschriebene Verfahren eignet sich auch zur Herstellung von anderen grossvolumigen Bauteilen für Aufzugskabinen, Busse, Wohnmobile, Container, Kühlgehäuse, Schüttgutbehälter für Lastwagen und Eisenbahngüterwagen, Notbehausungen und für Personenübergänge im Bau- und Verkehrsbereich.

## Patentansprüche

1. Verfahren zur integralen Herstellung von Wagenkasten mit einer selbsttragenden Leichtbaustruktur, bei dem eine innere Deckschicht (8) auf einen formgebenden, wagenkastengrossen Wickelkern (3) gewickelt wird, bei dem in einem Deckenbereich (9) und in einem Bodenbereich (13) Kanäle (10) und in Eckbereichen (11) formgebende Isolationskörper (12) mit der inneren Deckschicht (8) verbunden werden, bei dem ein Versteifungsgerippe (14) mit dem in den vorhergehenden Verfahrensschritten hergestellten Verbund verbunden wird, bei dem in den Öffnungen des Versteifungsgerippes (14) Isolationsplatten (17) angeordnet werden und die Öffnungen der späteren Fenster und Türen mit Aussparungen versehen werden, bei dem der in den vorhergehenden Verfahrensschritten hergestellte Verbund mit einer äusseren Deckschicht (19) umwickelt wird und bei dem der in den vorhergehenden Verfahrensschritten hergestellte Wagenkasten vom formgebenden Wickelkern (3) entformt wird,
dadurch gekennzeichnet,
dass mindestens eine Deckschicht (8;19) aus unterschiedlichen Schichten mit unterschiedlichen Materialien aufgebaut wird, indem auf eine erste Wickelschicht (22) ein Dämmmaterial (23) zur Vermeidung von thermischen Übergängen zwischen dem Versteifungsgerippe (14) und der Oberfläche des Wagenkastens über den gesamten Verbund gelegt wird und das Dämmmaterial (23) mit einer zweiten Wickelschicht (24) umwickelt wird.

2. Verfahren nach Anspruch 1,
dadurch gekennzeichnet,
dass die Aussparungen in die Öffnungen der späteren Fenster und Türen gelegte Blinddeckel (18) sind.

3. Verfahren nach Anspruch 1,
dadurch gekennzeichnet,
dass die Aussparungen in die Öffnungen der späteren Fenster und Türen passende Bleche sind und die entstehenden Hohlräume zwischen den Blechen ausgeschäumt werden.

4. Verfahren nach Anspruch 1,
dadurch gekennzeichnet,
dass die Aussparungen in die Öffnungen der späteren Fenster und Türen gelegte Rahmen sind, die nach dem Ausschneiden als Türblatt oder Blindabdeckung in den entsprechenden Öffnungen verwendet werden.

5. Verfahren nach einem der vorhergehenden Ansprüche,
dadurch gekennzeichnet,
dass mit dem Versteifungsgerippe (14) verbundene, als Langträger dienende obere Eckprofile (15) und untere Eckprofile (16) mit einer äusseren bewicklungsfähig gekrümmten Kontur in den Verbund eingebunden werden.

6. Verfahren nach Anspruch 5,
dadurch gekennzeichnet,
dass die unteren Eckprofile (16) einen ersten Anschluss (28) und einen zweiten Anschluss (29) aufweisen, an denen Querträger (30) angeschlossen werden.

7. Verfahren nach Anspruch 6,
dadurch gekennzeichnet,
dass im Zwischenbereich der Querträger (30) verlaufende Zug- und Druckstäbe (31) eingebunden werden.

8. Verfahren nach einem der vorhergehenden Ansprüche,
dadurch gekennzeichnet,
dass zur Herstellung der Wickelschichten ein harzgetränkter Faserstrang (7) in einander kreuzenden Lagen spiralförmig gewickelt wird.

9. Verfahren nach Anspruch 8,
dadurch gekennzeichnet,
dass der Faserstrang (7) aus Glasfasern besteht.

10. Verfahren nach Anspruch 8,
dadurch gekennzeichnet,
dass der Faserstrang (7) aus Carbonfasern besteht.

11. Verfahren nach Anspruch 8,
dadurch gekennzeichnet,
dass der Faserstrang (7) aus Naturfasern besteht.

## Claims

1. Method for the integral manufacture of coach bodies with a self-supporting lightweight structure, in which an inner covering layer (8) is wound on a winding mandrel (34), which is of the size of the coach body and determines its shape and in which channels (10) in one corner region (9) and in one base region (13) and shape-determining insulating bodies (12) in corner regions (11) are connected with the inner covering layer (8), in which a stiffening framework (14) is connected with the composite body, which is manufactured in the preceding method steps and in which insulating plates (17) are arranged in the openings of the stiffening framework (14) and the openings of the later windows and doors are provided by recesses, in which the composite body, which is manufactured in the preceding method steps, is wound around by an outer covering layer (19) and in which the coach body manufactured in the preceding method steps is removed from the shape-determining winding mandrel (3),
characterised thereby, that at least one covering layer (8; 19) is built up from different layers with different materials in that an insulating material (23) for avoidance of thermal transitions between the stiffening framework (14) and the surface of the coach body is laid over the entire composite body on a first winding layer (22) and the insulating material (23) is wound around by a second winding layer (24).

2. Method according to claim 1, characterised thereby, that the recesses are blank covers (18) laid into the openings of the later windows and doors.

3. Method according to claim 1, characterised thereby, that the recesses are sheet metal plates fitting into the openings of the later windows and doors and the hollow spaces arinsing between the sheet metal plates are filled with foam.

4. Method according to claim 1, characterised thereby, that the recesses are frames, which are laid into the openings of the later windows and doors and which after the cutting-out are used as door leaf or as blank cover in the corresponding openings.

5. Method according to one of the preceding claims, characterised thereby, that upper corner profiles (15) and lower corner profiles (16), which are connected with the stiffening framework (14) and serve as longitudinal carriers, are tied into the composite body with an outer curved outline capable of being wound over.

6. Method according to claim 5, characaterised thereby, that the lower corner profiles (16) display a first connection (28) and a second connection (29), at which transverse carriers (30) are connected.

7. Method according to claim 6, characterised thereby, that tension and compression rods (31) are tied in in the intermediate region of the transverse carriers (30).

8. Method according to one of the preceding claims, characterised thereby, that a resin-impregnated fibre strand (7) is wound in spiral shape in mutually crossing layers for the manufacture of the winding layers.

9. Method according to claim 8, characterised thereby, that the fibre strand (7) consists of glass fibres.

10. Method according to claim 8, characterised thereby, that the fibre strand (7) consists of carbon fibres.

11. Method according to claim 8, characterised thereby, that the fibre strand (7) consists of natural fibres.

## Revendications

1. Procédé pour la fabrication de caisses monocoques de véhicules à structure légère autoporteuse, selon lequel on enroule une couche de recouvrement intérieure (8) sur un noyau d'enroulement de façonnage (3) de la taille de la caisse de véhicule, on relie à la couche de recouvrement intérieure (8) des conduits (10), dans une zone de plafond (9) et dans une zone de plancher (13), et des corps isolants de façonnage (12), dans des zones d'angle (11), on relie une ossature de renforcement (14) à la structure sandwich fabriquée lors des phases de procédé précédentes, on dispose dans les ouvertures de l'ossature de renforcement (14) des plaques isolantes (17) et on prévoit des évidements dans les ouvertures des futures fenêtres et portes, on enveloppe la structure sandwich fabriquée lors des phases de procédé précédentes à l'aide d'une couche de recouvrement extérieure (19), et on enlève du noyau d'enroulement de faconnage (3) la caisse de véhicule fabriquée lors des phases de procédé précédentes,
caractérisé en ce que l'on construit au moins une couche de recouvrement (8 ; 19) à partir de différentes couches formées de matériaux différents, en posant sur une première couche d'enroulement (22) un matériau isolant (23) destiné à éviter les transferts de chaleur entre l'ossature de renforcement (14) et la surface de la caisse de véhicule, sur toute la structure sandwich, et en enveloppant ledit matériau isolant (23) à l'aide d'une seconde couche d'enroulement (24).

2. Procédé selon la revendication 1, caractérisé en ce que les évidements sont des caches (18) placés dans les ouvertures des futures fenêtres et portes.

3. Procédé selon la revendication 1, caractérisé en ce que les évidements sont des tôles adaptées aux ouvertures des futures fenêtres et portes, et les creux formés entre les tôles sont soumis à un moussage.

4. Procédé selon la revendication 1, caractérisé en ce que les évidements sont des cadres qui sont placés dans les ouvertures des futures fenêtres et portes et qui, une fois découpés, servent de vantail de porte ou de cache dans les ouvertures correspondantes.

5. Procédé selon l'une des revendications précédentes, caractérisé en ce que des profilés d'angle supérieurs (15) et inférieurs (16) reliés à l'ossature de renforcement (14) et servant de longerons sont intégrés à la structure sandwich grâce à un contour extérieur courbe et apte à être enveloppé.

6. Procédé selon la revendication 5, caractérisé en ce que les profilés d'angle inférieurs (16) ont un premier raccordement (28) et un second raccordement (29) au niveau desquels sont raccordées des traverses (30) .

7. Procédé selon la revendication 6, caractérisé en ce qu'on intègre des barres de traction et de pression (31) qui s'étendent dans la zone intermédiaire des traverses (30).

8. Procédé selon l'une des revendications précédentes, caractérisé en ce que pour fabriquer les couches d'enroulement, on enroule en spirale, en couches qui se croisent, un écheveau de fibres (7) imprégné de résine.

9. Procédé selon la revendication 8, caractérisé en ce que l'écheveau de fibres (7) se compose de fibres de verre.

10. Procédé selon la revendication 8, caractérisé en ce que l'écheveau de fibres (7) se compose de fibres de carbone.

11. Procédé selon la revendication 8, caractérisé en ce que l'écheveau de fibres (7) se compose de fibres naturelles.
